# EUROPÄISCHE PATENTSCHRIFT

(11) **EP 3 576 518 B1**
(45) Veröffentlichungstag und Bekanntmachung des Hinweises auf die Patenterteilung: **03.03.2021**
(21) Anmeldenummer: 18701404.8
(22) Anmeldetag: 08.01.2018
(51) Int. Cl.: A01G 9/029, A01G 22/63

(54) **TRAY ZUM KULTIVIEREN VON PFLANZEN UND SYSTEM UMFASSEND TRAY UND PFLANZTOPF**
TRAY FOR CULTIVATING PLANTS, AND SYSTEM COMPRISING A TRAY AND PLANT POT
PLATEAU DE CULTURE DE PLANTES, SYSTÈME COMPORTANT PLATEAU ET GODET

(30) Priorität: 31.01.2017 DE 102017101884
(43) Veröffentlichungstag der Anmeldung: 11.12.2019
(73) Patentinhaber: Pöppelmann Holding GmbH & Co. KG, 49393 Lohne (DE)
(72) Erfinder: ORSCHULIK, Günther, 49451 Holdorf (DE); TIMPHUS, André, 49393 Lohne (DE)
(74) Vertreter: Wischmeyer, André
(86) Internationale Anmeldenummer: PCT/EP2018/050370
(87) Internationale Veröffentlichungsnummer: WO 2018/141507

(56) Entgegenhaltungen:
- WO-A1-2009/000480
- WO-A1-2015/084163
- US-A1- 2016 029 572

## Beschreibung

Tray zum Kultivieren von Pflanzen und System umfassend Tray und Pflanztopf Die Erfindung betrifft ein Tray zum Kultivieren einer Pflanze, insbesondere eines Epiphyten, noch bevorzugter einer Orchidee, mit mehreren Nutzen zur Aufnahme jeweils eines Pflanztopfes, wobei das Tray mindestens ein Befestigungsmittel zur Festlegung des Pflanztopfes aufweist. Des Weiteren betrifft die Erfindung ein System umfassend ein vorbeschriebenes Tray und einen Pflanztopf.

Im Bereich der Aufzucht und Kultivierung von Pflanzen wird eine Vielzahl von Pflanztöpfen verwendet, wobei die Anzahl in die Hunderte oder Tausende gehen kann. Um die Handhabung der einzelnen Pflanztöpfe zu verbessern, kann eine Vielzahl von Pflanztöpfen auf einem Tray zusammengefasst oder in einem solchen festgelegt werden. Derartige Trays sind beispielsweise aus der US 5022183 A bekannt. Diese zeigt ein Tray mit mehreren Nutzen, wobei am Boden der Nutzen Vorsprünge angeordnet sind, die mit Entwässerungsöffnungen des Pflanztopfes zusammenwirken, um den Ptlanztopt in einem Nutzen des Trays testzulegen.

Ein weiteres gattungsgemäßes Tray ist aus WO2015/084163 A1 bekannt.

Nachteilig bei einem derartigen System ist, dass durch die am Boden des Nutzen angeordneten Befestigungselemente, die mit den Entwässerungsöffnungen des Pflanztopfes zusammenwirken, die Pflanztöpfe entweder eingesetzt werden müssen, bevor sie mit Substrat befüllt sind oder beim Einsetzen der Pflanztöpfe die Befestigungselemente das in den Pflanztopf eingebrachte Substrat verdrängen müssen. Weiterhin können die Befestigungselemente durch das Substrat verschmutzen und somit ein Festlegen oder Freigeben des Pflanztopfes erschwert werden. Bei Problemen mit dem Festlegen oder Lösen des Pflanztopfes sind diese Festlegungsmittel nur von der Unterseite zugänglich, so dass der ganze Tray angehoben werden muss.

Weiterhin kann es insbesondere bei der Kultivierung von Luftwurzeln ausbildenden Epiphyten wie Orchideen dazu kommen, dass diese nicht nur mit ihren Blättern sondern auch ihren Wurzeln in benachbarte Pflanztöpfe hineinwachsen. Hierdurch entsteht zwischen benachbarten Pflanztöpfen bzw. den Pflanzen in benachbarten Pflanztöpfen eine Verbindung, die die Handhabung einzelner Pflanztöpfe im Tray erschweren bzw. bei Entnahme des Pflanztopfes ein Durchtrennen derartiger Wurzeln notwendig macht, durch die die Pflanzen geschädigt werden.

Aufgabe der vorliegenden Erfindung ist es, ein Tray und ein System umfassend ein Tray und einen Pflanztopf der eingangs genannten Art dahingehend zu verbessern, dass die Gefahr des Verwachsens von Pflanzen in benachbarten Pflanztöpfen reduziert wird und wenn möglich gleichzeitig die Befestigungsmittel einfacher zu handhaben sind.

Diese Aufgabe wird durch ein erfindungsgemäßes Tray gelöst, bei dem die Nutzen jeweils einen zur vollständigen Aufnahme des einzubringenden Pflanztopfes vorgesehenen unteren Nutzenbereich aufweisen und jeweils ein das Befestigungsmittel aufweisender oberer Nutzenbereich zumindest durch eine für Wurzelwerk undurchdringbare, insbesondere undurchbrochene (seitliche) Nutzenwandung ausgebildet ist. Je nach Pflanzenart ist die seitliche Wandung für Wurzelwerk bzw. Wurzeln dann undurchdringbar, wenn sämtliche vorhandenen Ausnehmungen zumindest schmaler als 3mm oder als Schlitz mit noch enger anliegenden oder sich berührenden Kanten ausgebildet sind.

Das oder die Befestigungsmittel befinden sich bei einem in den Nutzen eingesetzten Pflanztopf oberhalb des Pflanztopfes und sind von oben gut zugänglich. Ein Verschmutzen der Befestigungsmittel mit Substrat wird dadurch weitgehend vermieden, da dieses typischerweise in dem unterhalb der Befestigungsmittel angeordneten Pflanztopf befindlich ist. Die Befestigungsmittel sind somit leichter und zuverlässiger handhabbar. Weiterhin sind die Befestigungsmittel an, in oder durch eine insbesondere undurchbrochene Nutzenwandung angeordnet, die den oberen Nutzenbereich bildet.

Die Nutzenwandung stellt damit gleichsam eine Fortsetzung des Pflanztopfes dar. Insbesondere bei der Kultivierung eines als Orchidee ausgebildeten Epiphyten möglicherweise aus dem Pflanztopf herauswachsende Wurzeln finden somit im oberen Nutzenbereich keine Ausnehmungen, durch die sie hindurchwachsen und sich so mit dem Nutzen verhaken können. Zudem wird derartigen Wurzeln ein Hinüberwachsen in Pflanztöpfe, die in den benachbarten Nutzen angeordnet sind, erschwert, da diese Wurzeln somit eine gegenüber dem Abstand der Nutzen verlängerte Strecke durch ihr Wachstum überbrücken müssen. Dadurch wird der für die Wurzeln (oder Blätter) effektive Abstand zwischen benachbarten Pflanztöpfen in den Nutzen erhöht, ohne die Aufstandfläche des Trays gegenüber einem herkömmlichen Tray zu vergrößern. Dadurch, dass das Tray ein Verwachsen benachbarter Pflanzen verhindert, wird die Handhabbarkeit der Pflanzen verbessert.

Der obere Nutzenbereich befindet sich bezogen auf eine Senkrechte auf einer unteren Aufstandfläche des Trays immer oberhalb des unteren Nutzenbereichs. Während der obere Nutzenbereich im Wesentlichen durch die seitliche Nutzenwand bzw. -wandung und den dazwischen befindlichen Innenraum des Nutzen ausgebildet wird, wird der untere Nutzenbereich durch die untere seitliche Nutzenwand und den Boden des Nutzens begrenzt und umfasst somit auch den innerhalb der unteren seitlichen Nutzenwand befindlichen Innenraum des Nutzen.

Insbesondere sind die Befestigungsmittel ohne Ösen, Durchbrüche und/oder hakenartige Formen ausgebildet, an denen sich die Pflanzen festlegen oder verhaken können ausgebildet. Alternativ kann das Befestigungsmittel auch durch eine durch Verkleben oder Verschweißen von Pflanztopf und Tray ausgebildete Verbindung hergestellt werden, wobei das Befestigungsmittel dann in Form dieser Verbindung vorliegt.

Vorzugsweise ist die Nutzenwandung des oberen Nutzenbereichs vollumfänglich undurchbrochen, so dass entlang des gesamten Umfangs des Nutzens, d.h. bei im Querschnitt runden Nutzen über 360° eine Begrenzung des Wachstumsbereichs der Pflanze vorliegt.

In einer vorteilhaften Ausgestaltung des Trays weist der untere Nutzenbereich einen ein Auflager für den Pflanztopf ausbildenden Boden auf. Das Tray stellt somit eine definierte Aufstandsfläche für einen einzubringenden Pflanztopf bereit, auf dem ein derartiger Pflanztopf aufliegen kann. Der Pflanztopf muss dadurch nicht in dem Nutzen z.B. durch eine Klemmung gehalten werden. Ein Einsetzen und Herausnehmen eines einzusetzenden Pflanztopfes in den Nutzen des Trays wird somit erleichtert.

Alternativ oder ergänzend können ein oder mehrere Absätze oder Ausbuchtungen in der Nutzenwandung vorhanden sein, die ein Auflager ausbilden. Insbesondere kann der Nutzen hierdurch mehrere Auflager für unterschiedliche Töpfe ausbilden. Ein Pflanztopf kann beispielsweise mit seinem Pflanztopfrand auf einem insbesondere vollständig umlaufend ausgebildeten Auflager aufliegen.

Vorteilhafterweise weist der untere Nutzenbereich zumindest in seinem oberen Drittel und somit in einem an den oberen Nutzenbereich angrenzenden Bereich, ebenfalls eine undurchbrochene Seitenwand auf. Besonders bevorzugt ist der Nutzen mit einer komplett undurchbrochenen Seitenwand versehen. Somit können in dem unteren Nutzenbereich auch solche Pflanztöpfe einsetzt werden, deren oberer Pflanztopfrand sich unterhalb der beispielsweise durch Befestigungsmittel ausgebildeten Grenze zum oberen Nutzenbereich befindet. Die Befestigungsmittel sichern somit den Pflanztopf im Nutzen, obgleich der Pflanztopf beispielsweise um eine Längsmittelachse noch drehbar sein kann. Insbesondere bildet das zumindest eine Befestigungsmittel eine (obere) Begrenzung des unteren Nutzenbereichs aus. Alternativ kann das Befestigungsmittel auch einen dann breiteren Übergangsbereich zwischen unterem und oberem Nutzenbereich ausbilden.

Bei einer weiteren vorteilhaften Ausgestaltung der Erfindung ist die Wandstärke im Bereich des Befestigungsmittels gegenüber einem das Befestigungsmittel nicht aufweisenden Bereich des Nutzen reduziert. Durch die hiermit einhergehende Flexibilität und/oder elastische Verformbarkeit des Befestigungsmittels kann die Einführung des Pflanztopfes erleichtert werden, wenn dieser zur Einnahme einer Endposition in dem Nutzen an dem sich elastisch verformenden Befestigungsmittel vorbeigeführt wird und sich das Befestigungsmittel anschließend in seine den Pflanztopf festlegende Ausgangsposition zurückformt. Insbesondere kann der Tray thermogeformt hergestellt werden, so dass die Wandstärke des Befestigungsmittels durch die Thermoformung des Trays beeinflussbar ist.

Vorzugsweise ist das Befestigungsmittel auf einen Pflanztopfrand des in den Nutzen einzubringenden Pflanztopfes wirkend ausgestaltet. Eine derartige Ausgestaltung des Befestigungsmittels vermeidet, dass an dem Pflanztopf ein entsprechendes Gegenstück zum Befestigungsmittel des Trays angeordnet sein muss. Der erfindungsgemäße Tray kann somit idealerweise mit handelsüblichen Pflanztöpfen verwendet werden. Um auf den Pflanztopfrand zu wirken ist die lichte Weite des inneren Querschnitts des Nutzen auf Höhe des Befestigungsmittels und durch dieses im Vergleich zu einem angrenzenden Querschnitt ohne Befestigungsmittel reduziert.

In einer bevorzugten Ausgestaltung ist das Befestigungsmittel als Rastnocken ausgebildet. Ein solcher Rastnocken ist ein an seinen Rändern bündig mit der Nutzenwandung abschließendes vorspringendes Element. Da ein solcher Nocken vorzugsweise eine Beweglichkeit durch die Flexibilität des Materials, entweder des Nockenmaterials oder des Materials der Nutzenwandung erhält, kann ein solcher Rastnocken auf der Innenseite des Nutzens vorzugsweise durch Thermoformung ausgebildet werden. Durch eine derartige Ausgestaltung des Befestigungsmittels als Rastnocken wird verhindert, dass sich die Pflanze während ihres Wachstums mit dem Befesti-gungsmittel verhakt. Hierdurch wird das Einsetzen und Entnehmen von Pflanze bzw. Pflanztopf mit Pflanze aus dem Tray erleichtert. Besonders vorteilhaft ist der Nocken mit abgerundeten Übergängen in die Nutzenwandung gestaltet. Hierdurch wird die Gefahr eines Verhakens weiter reduziert.

Verzugsweise ist das Befestigungsmittel und insbesondere ein als Rastnocken ausgebildetes Befestigungsmittel als hinterschnittene Ein- oder Ausbuchtung der Nutzenwandung ausgebildet. Unter einer Ausbuchtung der Nutzenwandung wird ein von der umgebenden Nutzenwandung hin zur Längsmittelachse des Nutzens geformter Teil der Nutzenwandung verstanden. Somit wird der Nocken direkt aus dem Material der Nutzenwandung gebildet. Hierdurch wird bei der Herstellung des Trays Material eingespart, da der Nocken bei durch Thermo-Umformung gebildeten Trays durch eine Umformung von ohnehin vorhandenen Material gebildet wird. Als Folge der Umformung ist die Wandstärke in Bereichen des Nockens geringer als die Materialstärke der Nutzenwandung. Weiterhin wird eine durchgehende Oberfläche auf der Innenseite der Nutzenwandung sichergestellt.

In einer bevorzugten Ausführung weist das insbesondere als Rastnocken ausgebildete Befestigungsmittel oberseitig eine Anlaufschräge auf. Eine derartige Anlaufschräge am Rastnocken erleichtert das Einsetzen eines einzubringenden Pflanztopfes in den Tray.

Vorteilhafterweise weist ein Nutzen mehrere über den Umfang der Nutzenwandung verteilte Befestigungsmittel, insbesondere mehrere vorzugsweise gleichmäßig über den Umfang verteilte Rastnocken, auf. Durch die Verwendung mehrerer, über den Umfang verteilter Befestigungsmittel wird der sichere Sitz und Halt eines in den Nutzen einzubringenden Pflanztopfes erhöht.

In einer bevorzugten Ausgestaltung weist die Nutzenwandung mindestens einen zurückspringenden Eingriffbereich auf. Ein zurückspringender Eingriffbereich ist ein gegenüber der weiteren, vorzugsweise konisch ausgebildeten Nutzenwand insbesondere stärker abgeschrägter, von einer Längsmittelachse des Nutzen entfernter oder sich entlang der Längsmittelachse entfernender Bereich. Ein derartiger Eingriffbereich erleichtert den Zugang zu einem in den Nutzen eingebrachten Pflanztopf und unterstützt insbesondere ein seitliches Eingreifen in Richtung der im Pflanztopf befindlichen Pflanze.

Die eingangs gestellte Aufgabe wird ebenfalls durch ein System zum Kultivieren einer Pflanze, insbesondere eines Epiphyten, vorzugsweise einer Orchidee, gelöst, wobei das System einen vor- oder nachstehend beschriebenen erfindungsgemäßen Tray und wenigstens einen in dem Nutzen des Trays festzulegenden oder festgelegten Pflanztopf, der einen Pflanztopfboden und eine für Wurzelwerk undurchdringbare, insbesondere undurchbrochene Pflanztopfwandung aufweist. Durch die Verwendung eines Pflanztopfes mit einer solchen, insbesondere undurchbrochenen, seitlichen Pflanztopfwandung wird mit dem erfindungsgemäßen System der Pflanze eine glatte Oberfläche zur Verfügung gestellt, die sich vom Pflanztopf über die Pflanztopfwandung in den Bereich des oberen Nutzenbereichs fortsetzt. Die Nutzenwandung des oberen Nutzenbereichs und die Pflanztopfwandung bilden eine Begrenzung für einen für Wurzelwerk undurchdringbaren Wachstumsbereich aus. Da der Pflanztopf in dem Tray festgelegt ist, ist ein Entnehmen der Pflanze, gegebenenfalls mit dem Substrat, erleichtert, da das Wurzelwerk der Pflanze weder im Bereich des Pflanztopfes noch im oberen Nutzenbereich mit beispielsweise Ausnehmungen in der Pflanztopf- bzw. Nutzenwandung verwachsen kann. Für die Entnahme einer gegebenenfalls an der insbesondere undurchbrochenen Wandung des Pflanztopfes und eventuell des oberen Nutzenbereich anhaftenden Pflanze mit oder ohne deren Substrat notwendige Auszugskräfte sind kleiner als die notwendigen Lösekräfte zum Entnehmen des Pflanztopfes aus dem Nutzen.

Vorzugsweise weist der Pflanztopf wenigstens ein Festlegungsmittel auf, dass mit dem Befestigungsmittel des Nutzens zusammenwirken kann. Somit kann die Festlegung des Pflanztopfes des erfindungsgemäßen Systems beispielsweise über einen auf Seiten des Pflanztopfes vorhandenen Nocken erfolgen, der mit einer Schulter des Nutzens wechselwirkt.

Vorteilhafterweise ist im System ein Übergang zwischen einem oberen Rand des Pflanztopfes und der Nutzenwandung für Wurzeln undurchdringlich, wobei insbesondere der Pflanztopf mit einem oberen Pflanztopfrand an der Nutzenwandung umlaufend anliegt. Durch eine derartige Gestaltung wird ein Spalt zwischen Pflanztopf und Nutzenwandung minimiert, so dass die Gefahr, dass Wurzeln in diesen Spalt eindringen und die Pflanze mit ihrem Pflanztopf und dem Tray verklemmt bzw. verwächst und ihre Entnahme aus dem System erschwert, verringert.

Bei einer weiteren erfindungsgemäßen Ausführung weist der Pflanztopfrand einen nach außen stehenden Kragen auf. Hierdurch wird der Pflanztopfrand verstärkt, so dass die Wirkung eines Befestigungsmittels auf den Pflanztopfrand nicht zu Beschädigungen des Pflanztopfes führt. Die Zuverlässigkeit des Systems beim Einsetzen und Entnehmen von Pflanztöpfen wird verbessert. Ein nach außen abstehender Kragen behindert das Entnehmen der Pflanze, gegebenenfalls mit Substrat, nicht, da der Vorsprung nicht in den Bereich hineinragt, in dem die Pflanze angeordnet oder durch den hindurch sie entnommen werden muss. Hierbei sind insbesondere an der Pflanztopfaußenseite unterhalb des Pflanztopfrandes über den Umfang verteilt den Kragen stützende Verstärkungsstreben angeordnet, wodurch der Pflanztopf im Randbereich für die Zusammenwirkung mit Befestigungsmitteln des Trays des Systems verstärkt wird. Die Handhabung der Pflanztöpfe und die Wirkung der Befestigungsmittel werden zuverlässiger gestaltet.

Insbesondere hat es sich bei einer Weiterbildung der Erfindung als vorteilhaft erwiesen, wenn das Tray durch Thermoformung und der Pflanztopf durch Spritzgießen hergestellt ist. Überraschenderweise haften beispielsweise Orchideen in einem im Spritzguß hergestellten Pflanztopf weniger an als in einem durch Thermoformung hergestellten Pflanztopf. Der obere Nutzenbereich spielt für das Anhaften der Pflanzen unter Materialgesichtspunkten eine geringere Rolle, so dass der Tray vorzugsweise durch Thermoformung hergestellt werden kann.

In einer bevorzugten Ausführung sind der Pflanztopf und der obere Nutzenbereich kegelstumpfförmig ausgebildet. Hierdurch kann ein Drehen des im Nutzen festgelegten Pflanztopfes ermöglicht werden. Dies ermöglicht dann die Ausrichtung der Pflanzen im Tray. Durch die sich nach oben aufweitende Form eines Kegelstumpfes wird zudem eine Entnahme der Pflanze, gegebenenfalls mit Substrat, erleichtert.

In einer besonderen Ausführungsform weist das System jeweils zwischen benachbarten Nutzen des Trays angeordnete Deckflächenbereiche auf, die von einer Nutzenöffnung ausgehend ansteigend ausgestaltet sind. Die Deckflächen steigen dabei an, bis sie an die Bereiche, die von benachbarten Nutzenöffnungen ausgehen, stoßen. Hierdurch wird ein Bewässern der Pflanzen erleichtert, da ein derartig gestalteter Deckflächenbereich Wasser direkt in die zugehörigen Nutzen ableitet.

Pflanztopf und Nutzen sind vorzugsweise so aufeinander abgestimmt, dass ein Übergang zwischen einem oberen Rand und der seitlichen Wandung des Nutzen spaltfrei ausgeführt ist, so dass dort keine Wurzeln bzw. kein Wurzelwerk einwachsen sein.

Vorzugsweise weist das Tray des Systems in Randbereichen Handhabungshilfen auf. Derartige Handhabungshilfen können das Entstapeln von gestapelten Trays erleichtern. Insbesondere das Vereinzeln von Trays aus einem Stapel wird erleichtert, wenn jedes Tray eine derartige Handhabungshilfe aufweist. Diese können beispielsweise durch Vorsprünge oder Ausnehmungen in Randbereichen des Trays gebildet sein.

Weitere Vorteile und Einzelheiten der Erfindung lassen sich der nachfolgenden Figurenbeschreibung entnehmen. Es zeigen:
- Fig. 1:: ein erfindungsgemäßes Ausführungsbeispiel,
- Fig. 2:: einen Ausschnitt II des Systems nach Fig. 1,
- Fig. 3:: einen Schnitt durch einen Nutzen eines Trays des erfindungsgemäßen Systems mit eingebrachtem Pflanztopf gemäß Schnitt III in Fig. 2
- Fig. 4:: einen Schnitt durch einen Nutzen eines Trays des erfindungsgemäßen Systems mit eingebrachtem Pflanztopf gemäß Schnitt IV in Fig. 2.

Nachfolgend werden gleichwirkende Elemente der Erfindung mit einer einheitlichen Bezugsziffer versehen, sofern dieses sinnvoll ist. Die nachfolgend beschriebenen Merkmale der Ausführungsbeispiele können auch in anderen Merkmalskombinationen mit den Merkmalen der unabhängigen Ansprüche Gegenstand der Erfindung sein.

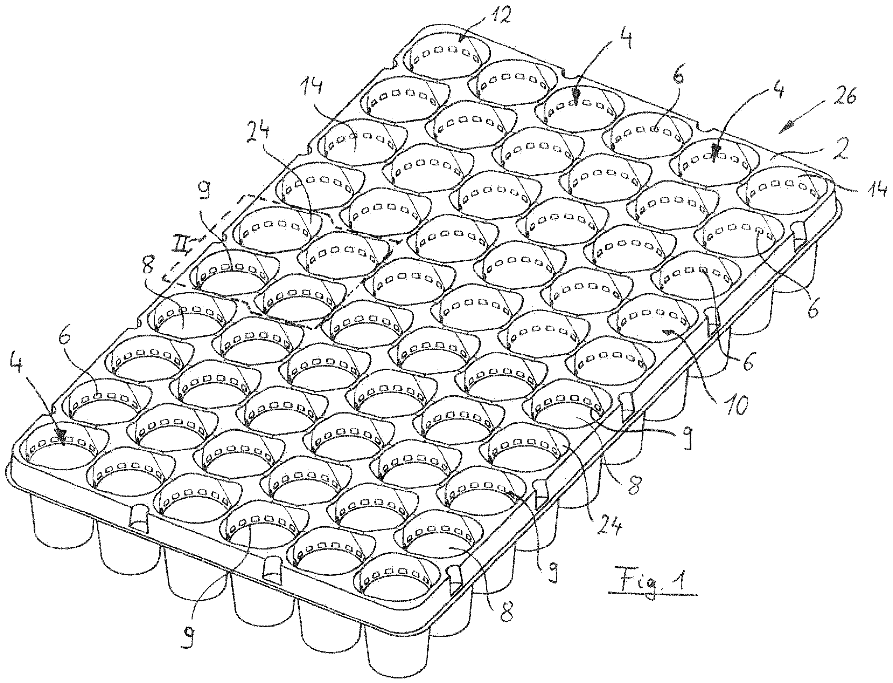

Fig. 1 zeigt ein Tray 2 zum Kultivieren einer Pflanze mit mehreren Nutzen 4. In die Nutzen 4 des Trays 2 sind mehrere Pflanztöpfe 8 mit oberen Pflanztopfrändern 9 eingebracht. Die Kombination aus Tray 2 und Pflanztopf 8 bildet ein System 26 zum Kultivieren einer Pflanze.

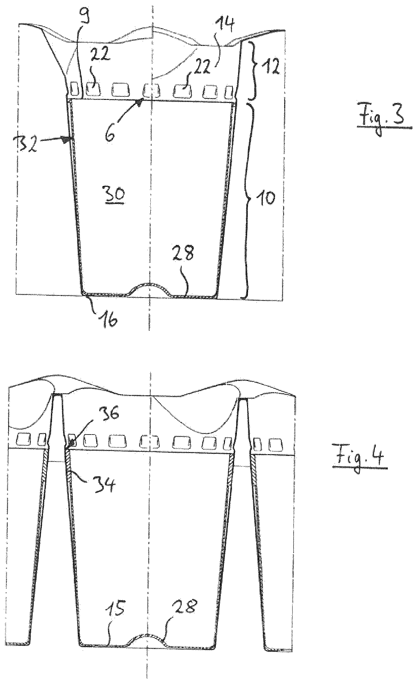

Das Tray 2 weist Befestigungsmittel 6 auf. Diese sind vorliegend an der Nutzenwandung 14 eines oberen Nutzenbereichs 12 (vgl. Fig. 3) angeordnet. Die Pflanztöpfe 8 sind derart in einen unteren Nutzenbereich 10 eingebracht, dass der von einer undurchbrochenen Nutzenwandung 14 gebildete obere Nutzenbereich 12 den eingebrachten Pflanztopf 8 überragt. Das Befestigungsmittel 6 ist im vorliegenden Ausführungsbeispiel als Rastnocke ausgebildet.

Der erfindungsgemäße Tray 2 weist weiterhin im oberen Bereich der Nutzen 4 einen Eingriffbereich 24 auf. Dieser erleichtert die Handhabung von in den Nutzen 4 eingebrachten Pflanztöpfen 8.

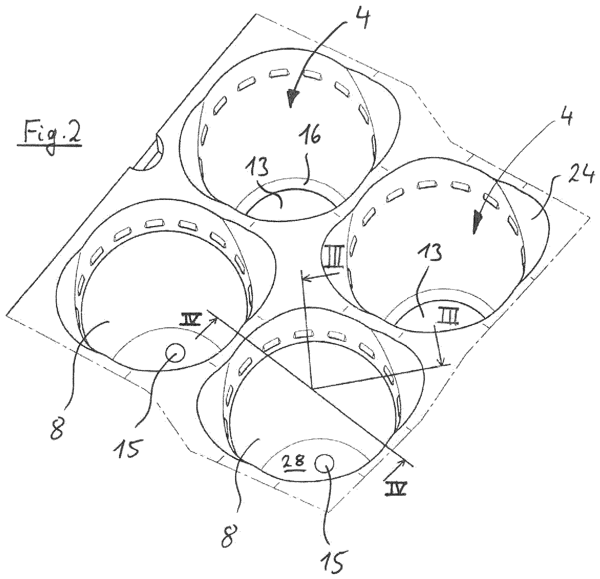

Die Nutzen 4 weisen einen Boden 16 auf (Fig. 2). Der Boden 16 ist dabei als Auflager für Pflanztöpfe ausgestaltet. Er ist ungeachtet einer unteren Entwässerungs- und Belüftungsöffnung 13 so breit ausgebildet, dass ein Pflanztopf 8, der in dem Nutzen 4 eingebracht ist, auf diesem Boden 16 aufsteht. Pflanztopfbodenöffnungen 15 überdecken sich in einer Draufsicht zumindest teilweise mit der Öffnung 13

In den Figuren 3 und 4 ist jeweils ein Schnitt durch einen Nutzen 4 mit eingebrachtem Pflanztopf 8 dargestellt. Es ist erkennbar, dass die Befestigungsmittel 6 in Form eines Rastnockens aus der Nutzenwandung 14 im oberen Nutzenbereich 12 ausgeformt sind. Die Rastnocken gehen damit an ihren Rändern stetig in die Nutzenwandung 14 über. Die Rastnocken weisen eine auf ihrer dem Boden 16 abgewandten Seite eine Anlaufschräge 22 auf. Durch diese Anlaufschräge ist das Einführen eines Pflanztopfes 8 in den Nutzen 4 über die Rastnocken hinweg erleichtert. In die Gegenrichtung, d. h. eine Bewegung des Pflanztopfes 8 vom Boden 16 weggerichtet entfalten die Rastnocken eine Sperrwirkung. Somit kann der Pflanztopf 8 nicht ohne weiteres aus dem Nutzen 4 entnommen werden. Der Pflanztopf 8 eines erfindungsgemäßen Systems 26 weist dabei einen Pflanztopfboden 28 und eine Pflanztopfwandung 30 auf. Der von der Pflanztopfwandung 30 umfasste Bereich ist in Form eines Kegelstumpfes ausgeformt. Die Pflanztopfbodenöffnungen 15 des Pflanztopfbodens 28 sind vorzugsweise an der tiefsten Stelle des Pflanztopfes 8. Durch diese Ausnehmung kann beispielsweise Gießwasser den Pflanztopf verlassen.

Der Pflanztopf 8 weist einen Pflanztopfrand 9 mit einem Kragen auf. Dieser steht an der Pflanztopfaußenseite 32 von der Pflanztopfwandung 30 ab. Der Pflanztopfrand 9 und auch der Kragen werden durch Verstärkungsstreben 34 verstärkt. Diese Verstärkungsstreben 34 unterstützen die Festlegungswirkung der Rastnocken im Zusammenspiel mit dem Pflanztopfrand 9.

Ein Übergang 36 zwischen einem oberen Rand 9 und der seitlichen Wandung des Nutzen 4 ist spaltfrei ausgeführt, so dass dort keine Wurzeln bzw. kein Wurzelwerk einwachsen sein. Der Rand 9 liegt bei diesem Ausführungsbeispiel an der seitlichen Wandung des unteren Nutzenbereichs 10 an.

## Patentansprüche

1. Tray zum Kultivieren einer Pflanze, insbesondere einer Orchidee, mit mehreren Nutzen (4) zur Aufnahme jeweils eines Pflanztopfes (8), wobei das Tray (2) mindestens ein Befestigungsmittel (6) zur Festlegung des Pflanztopfes (8) aufweist, **dadurch gekennzeichnet, dass** die Nutzen (4) jeweils einen zur vollständigen Aufnahme des einzubringenden Pflanztopfes (8) vorgesehenen unteren Nutzenbereich (10) aufweisen und jeweils ein das Befestigungsmittel (6) aufweisender oberer Nutzenbereich (12) zumindest durch eine für Wurzelwerk undurchdringbare, insbesondere undurchbrochene Nutzenwandung (14) ausgebildet ist.

2. Tray nach Anspruch 1, **dadurch gekennzeichnet, dass** die Nutzenwandung (14) des oberen Nutzenbereichs (12) vollumfänglich undurchbrochen ist.

3. Tray nach Anspruch 1 oder 2, **dadurch gekennzeichnet, dass** der untere Nutzenbereich (10) einen ein Auflager für den Pflanztopf (8) ausbildenden Boden (16) aufweist.

4. Tray nach einem der vorhergehenden Ansprüche, **dadurch gekennzeichnet, dass** der untere Nutzenbereich (10) zumindest in seinem oberen Drittel ebenfalls eine undurchbrochene Seitenwand aufweist.

5. Tray nach einem der vorhergehenden Ansprüche, **dadurch gekennzeichnet, dass** die Wandstärke im Bereich des Befestigungsmittels (6) gegenüber einem das Befestigungsmittel (6) nicht aufweisenden Bereich des Nutzen reduziert ist.

6. Tray nach einem der vorhergehenden Ansprüche, **dadurch gekennzeichnet, dass** das Befestigungsmittel (6) auf einen Pflanztopfrand (9) des in den Nutzen (4) einzubringenden Pflanztopfes (8) wirkend ausgestaltet ist.

7. Tray nach nach einem der vorherigen Ansprüche, **dadurch gekennzeichnet, dass** das Befestigungsmittel (6) als Rastnocken ausgebildet ist.

8. Tray nach einem der vorherigen Ansprüche, **dadurch gekennzeichnet, dass** das Befestigungsmittel (6) oberseitig eine Anlaufschräge (22) aufweist.

9. Tray nach einem der vorherigen Ansprüche, **dadurch gekennzeichnet, dass** das Befestigungsmittel (6) zumindest teilweise als hinterschnittene Aus- oder Einbuchtung der Nutzenwandung (14) ausgebildet ist.

10. Tray nach einem der vorherigen Ansprüche, **dadurch gekennzeichnet, dass** der Nutzen (4) mehrere über den Umfang der Nutzenwandung (14) verteilte Befestigungsmittel (6) aufweist.

11. Tray nach einem der vorherigen Ansprüche, **dadurch gekennzeichnet, dass** die Nutzenwandung (14) mindestens einen zurückspringenden Eingriffbereich (24) aufweist.

12. System zum Kultivieren einer Pflanze, insbesondere einer Orchidee, mit einem Tray (2) nach einem der Ansprüche 1 bis 11 und zumindest einem in dem unteren Nutzenbereich (10) eines Nutzen (4) des Trays (2) festgelegten Pflanztopf (8), der einen Pflanztopfboden (28) und eine undurchbrochene Pflanztopfwandung (30) aufweist, wobei die Nutzenwandung (14) des oberen Nutzenbereichs (12) und die Pflanztopfwandung (30) eine Begrenzung für einen für Wurzelwerk undurchdringbaren Wachstumsbereich ausbilden.

13. System nach Anspruch 12, **dadurch gekennzeichnet, dass** der Pflanztopf (8) wenigstens ein Festlegungsmittel aufweist, das mit dem Befestigungsmittel (6) des Nutzen (4) zusammenwirken kann.

14. System nach Anspruch 12 oder 13, **dadurch gekennzeichnet, dass** ein Übergang (36) zwischen einem oberen Rand (9) des Pflanztopfes (8) und der seitlichen Wandung des Nutzen (4) für Wurzelwerk undurchdringlich ist und insbesondere der Pflanztopf (8) mit dem oberen Pflanztopfrand (9) an der Nutzenwandung umlaufend anliegt.

15. System nach Anspruch 14, **dadurch gekennzeichnet, dass** der Pflanztopfrand (9) einen nach außen stehenden Kragen aufweist, wobei insbesondere an der Pflanztopfaußenseite (32) unterhalb des Kragens über den Umfang verteilt den Pflanztopfrand (9) stützende Verstärkungsstreben (34) angeordnet sind.

16. System nach einem der vorherigen Ansprüche 12 bis 15, **dadurch gekennzeichnet, dass** das Tray (2) durch Thermoformung und der Pflanztopf (8) durch Spritzgießen hergestellt ist.

## Claims

1. Tray for cultivating a plant, in particular an orchid, having multiple cells (4) each for accommodating a plant pot (8), the tray (2) having at least one fastening means (6) for securing the plant pot (8), **characterised in that** the cells (4) each have a lower cell region (10) intended to fully accommodate the plant pot (8) to be inserted, and an upper cell region (12) respectively incorporating the fastening means (6) is formed at least by a cell wall (14) that is impenetrable to root systems, in particular non-perforated.

2. Tray as claimed in claim 1, **characterised in that** the cell wall (14) of the upper cell region (12) is entirely non-perforated.

3. Tray as claimed in claim 1 or 2, **characterised in that** the lower cell region (10) has a base (16) providing a support for the plant pot (8).

4. Tray as claimed in one of the preceding claims, **characterised in that** the lower cell region (10) likewise has a non-perforated side wall at least in its upper third.

5. Tray as claimed in one of the preceding claims, **characterised in that** the wall thickness in the region of the fastening means (6) is reduced compared with a region of the cell not incorporating the fastening means (6).

6. Tray as claimed in one of the preceding claims, **characterised in that** the fastening means (6) is designed to act on a plant pot rim (9) of the plant pot (8) to be inserted in the cell (4).

7. Tray as claimed in one of the preceding claims, **characterised in that** the fastening means (6) is provided in the form of a latching cam.

8. Tray as claimed in one of the preceding claims, **characterised in that** the fastening means (6) has an inclined face (22) at the top end.

9. Tray as claimed in one of the preceding claims, **characterised in that** the fastening means (6) is provided at least partially in the form of an undercut protrusion or indentation of the cell wall (14).

10. Tray as claimed in one of the preceding claims, **characterised in that** the cell (4) has multiple fastening means (6) distributed around the circumference of the cell wall (14).

11. Tray as claimed in one of the preceding claims, **characterised in that** the cell wall (14) has at least one recessed engagement area (24).

12. System for cultivating a plant, in particular an orchid, having a tray (2) as claimed in one of claims 1 to 11 and at least one plant pot (8) secured in the lower cell region (10) of a cell (4) of the tray (2) having a plant pot base (28) and a non-perforated plant pot wall (30), and the cell wall (14) of the upper cell region (12) and plant pot wall (30) form a boundary for a growth region that is impenetrable to root systems.

13. System as claimed in claim 12, **characterised in that** the plant pot (8) has at least one securing means which is able to cooperate with the fastening means (6) of the cell (4) .

14. System as claimed in claim 12 or 13, **characterised in that** a transition (36) between a top rim (9) of the plant pot (8) and the side wall of the cell (4) is impenetrable to root systems and in particular the plant pot (8) lies circumferentially against the cell wall by means of the top plant pot rim (9).

15. System as claimed in claim 14, **characterised in that** the plant pot rim (9) has an outwardly projecting collar, and reinforcing ribs (34) supporting the plant pot rim (9) are provided, distributed in particular around the circumference on the plant pot external face (32) underneath the collar.

16. System as claimed in one of preceding claims 12 to 15, **characterised in that** the tray (2) is produced by thermoforming and the plant pot (8) by injection moulding.

## Revendications

1. Plateau destiné à la culture d'une plante, en particulier d'une orchidée, comprenant plusieurs alvéoles (4) pour la réception respectivement d'un godet (8), dans lequel le plateau (2) présente au moins un moyen de fixation (6) pour l'agencement du godet (8), **caractérisé en ce que** les alvéoles (4) présentent respectivement une zone d'alvéole inférieure (10) prévue pour la réception totale du godet (8) à introduire et respectivement une zone d'alvéole supérieure (12) présentant le moyen de fixation (6) et formée au moins par une paroi d'alvéole (14) impénétrable au système racinaire et en particulier non ajourée.

2. Plateau selon la revendication 1, **caractérisé en ce que** la paroi d'alvéole (14) de la zone d'alvéole supérieure (12) est non ajourée sur toute sa périphérie.

3. Plateau selon la revendication 1 ou 2, **caractérisé en ce que** la zone d'alvéole inférieure (10) présente un fond (16) formant un appui pour le godet (8).

4. Plateau selon une des revendications précédentes, **caractérisé en ce que** la zone d'alvéole inférieure (10) présente également, au moins dans son tiers supérieur, une paroi latérale non ajourée.

5. Plateau selon une des revendications précédentes, **caractérisé en ce que** l'épaisseur de paroi au niveau du moyen de fixation (6) est réduite par rapport à une zone de l'alvéole ne présentant pas le moyen de fixation (6).

6. Plateau selon une des revendications précédentes, **caractérisé en ce que** le moyen de fixation (6) est agencé pour agir sur un bord de godet (9) du godet (8) à introduire dans l'alvéole (4).

7. Plateau selon une des revendications précédentes, **caractérisé en ce que** le moyen de fixation (6) est formé comme un ergot d'encliquetage.

8. Plateau selon une des revendications précédentes, **caractérisé en ce que** le moyen de fixation (6) présente une pente de départ (22) sur le côté supérieur.

9. Plateau selon une des revendications précédentes, **caractérisé en ce que** le moyen de fixation (6) est formé au moins en partie comme un bombement ou une échancrure en contre-dépouille de la paroi d'alvéole (14).

10. Plateau selon une des revendications précédentes, **caractérisé en ce que** l'alvéole (4) présente plusieurs moyens de fixation (6) répartis sur la périphérie de la paroi d'alvéole (14) .

11. Plateau selon une des revendications précédentes, **caractérisé en ce que** la paroi d'alvéole (14) présente au moins une zone d'emboîtement en retrait (24).

12. Système de culture d'une plante, en particulier d'une orchidée, comprenant un plateau (2) selon une des revendications 1 à 11 et au moins un godet (8) fixé dans la zone d'alvéole inférieure (10) d'une alvéole (4) du plateau (2), lequel présente un fond de godet (28) et une paroi de godet non ajourée (30), dans lequel la paroi d'alvéole (14) de la zone d'alvéole supérieure (12) et la paroi de godet (30) forment une délimitation pour une zone de croissance impénétrable au système racinaire.

13. Système selon la revendication 12, **caractérisé en ce que** le godet (8) présente au moins un moyen d'agencement qui peut coopérer avec le moyen de fixation (6) de l'alvéole (4).

14. Système selon la revendication 12 ou 13, **caractérisé en ce qu'**une jonction (36) entre un bord supérieur (9) du godet (8) et la paroi latérale de l'alvéole (4) est impénétrable au système racinaire et en particulier le godet (8) est, avec le bord supérieur (9) du godet, situé sur la circonférence de la paroi d'alvéole.

15. Système selon la revendication 14, **caractérisé en ce que** le bord de godet (9) présente un col disposé vers l'extérieur, dans lequel en particulier des tiges de renfort (34) supportant le bord de godet (9) sont disposées de manière répartie sur la périphérie au niveau de la face extérieure de godet (32) en dessous du col.

16. Système selon une des revendications précédentes 12 à 15, **caractérisé en ce que** le plateau (2) est fabriqué par thermoformage et le godet (8) par moulage par injection.
